# EUROPEAN PATENT APPLICATION

(11) **EP 4 517 033 A1**
(43) Date of publication of application: **05.03.2025**
(21) Application number: 23796291.5
(22) Date of filing: 21.04.2023
(51) Int. Cl.: E05B 81/90, E05B 17/18, E05B 85/16, B60J 5/04

(54) **VEHICLE HANDLE**

(30) Priority: 28.04.2022 JP 2022074269
(71) Applicant: Alpha Corporation, Yokohama-shi, Kanagawa 236-0004 (JP)
(72) Inventor: ITO, Noriaki, Yokohama-shi, Kanagawa 236-0004 (JP); NISHIZUKA, Mitsuo, Yokohama-shi, Kanagawa 236-0004 (JP)
(74) Representative: Daub, Thomas
(86) International application number: PCT/JP2023/016026
(87) International publication number: WO 2023/210551

(57) **Abstract**

Provided is a vehicle handle installed on a door of a vehicle such that a pulling operation can be carried out on the vehicle handle, the vehicle handle comprising a handle body portion which is provided with an opening for operation to a cylinder lock installed in the door and a cap which closes the opening for operation. An elastic lock portion is provided to one of the cap and the handle body and a locked portion is provided to the other one thereof. The elastic lock portion is translated along a door surface as a result of an attaching/detaching operation of the cap to/from the opening for operation, and is elastically locked to and unlocked from the locked portion.

## Description

### TECHNICAL FIELD

The present disclosure relates to a vehicle handle.

### BACKGROUND ART

As a vehicle handle used to open and close a door of a vehicle, a vehicle handle described in Patent Literature 1 is known.

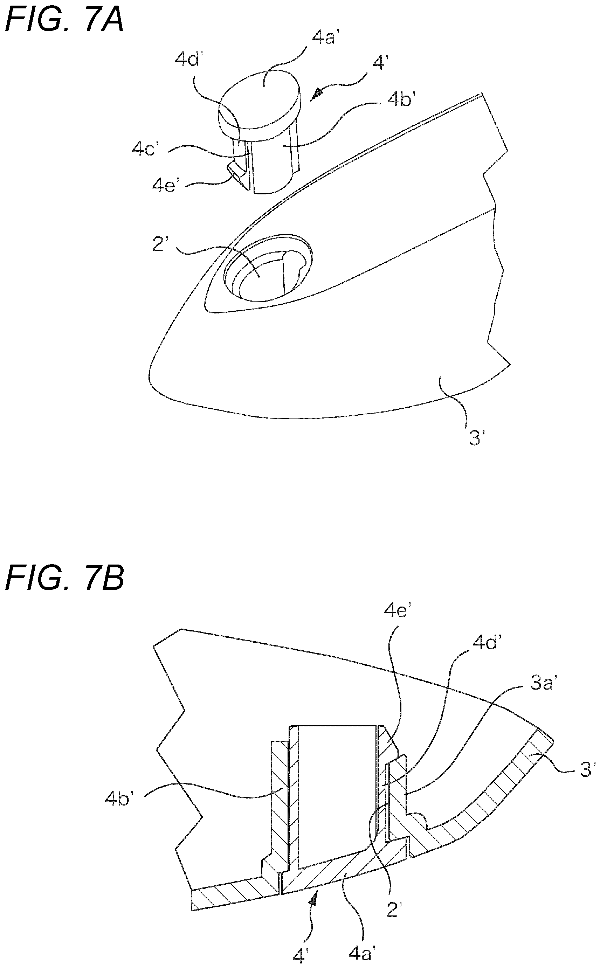

As shown in FIG. 7A and FIG. 7B, the handle in an example of the related art includes a handle body portion 3' having a key access opening 2' communicating with a key operation portion of a cylinder lock used for unlocking operation in an emergency or the like.

The key access opening 2' of the handle body portion 3' is closed by a cap 4' in an attachable and detachable manner in order to prevent the cylinder lock from being exposed to the outside in a normal state, and the cap 4' is removed when access to the cylinder lock is required.

The cap 4' includes a cylindrical portion 4b' protruding from a cap main body portion 4a' in a back surface direction, and a part of the cylindrical portion 4b' is separated via a slit 4c' to form a locking leg 4d' that is elastically deformable. When a locking protrusion 4e' is inflated at a tip end of the locking leg 4d' and the cap 4 is pushed into the key access opening 2', the locking protrusion 4e' interferes with a peripheral wall of a fitting cylindrical portion 3a' that protrudes from the key access opening 2' to a back side, and after the locking leg 4d' is once elastically deformed and returns to an original position, the locking protrusion 4e' is elastically locked to the fitting cylindrical portion 3a', and attaching operation of the cap 4 is completed.

When a tip end of the cylindrical portion 4b' of the cap 4 is pushed out to a front side from an attached state, the locking leg 4d' is once elastically deformed, the locking of the locking protrusion 4e' is released, and the cap 4' can be removed.

However, in the above-described example in the related art, since the attachment and detachment of the cap 4' is accompanied by the elastic deformation of the locking leg 4d', it is necessary to ensure an arm length of the locking leg 4d' to prevent reduction of operability due to an excessive operation force during the attachment and detachment operation of the cap 4, in particular, the detachment operation.

However, if the arm length is increased, a length from the cap main body portion 4a' to the tip end of the cylindrical portion is increased, and as a result, a distance between a cylinder lock (not shown) disposed on a deep side thereof and a front surface of the handle body portion 3' is also increased, resulting in a problem of reduced operability of the cylinder lock.

### CITATION LIST

### PATENT LITERATURE

Patent Literature 1: EP2,853,664B1

### SUMMARY OF INVENTION

### TECHNICAL PROBLEM

The present disclosure provides a vehicle handle in which a cylinder lock is capable of being disposed near a front surface of a handle body portion.

### SOLUTION TO PROBLEM

According to the present disclosure, a vehicle handle to be attached to a door of a vehicle such that the vehicle handle is operable to be pulled out, the vehicle handle includes:
a handle body portion 3 having an operation opening 2 for a cylinder lock 1 attached to the door; and
a cap 4 configured to close the operation opening 2, in which
an elastic locking portion 6 is provided on one of the cap 4 and the handle body portion 3, the elastic locking portion 6 being translationally moved along a door front surface in accordance with an attachment and detachment of the cap 4 with respect to the operation opening 2, and being elastically locked to and unlocked from a locked portion 5 provided on the other of the cap and the handle body portion.

The vehicle handle includes: the handle body portion 3 in which the operation opening 2 to the cylinder lock 1 is opened; and the cap 4 that can be attached to and detached from the operation opening 2 and closes the operation opening 2 in an attached state to prevent the cylinder lock 1 from being exposed to the outside. The locked portion 5 is formed on one of the cap 4 and the handle body portion 3, and the elastic locking portion 6 is formed on the other of the cap and the handle body portion, the elastic locking portion 6 being translationally moved along a door front surface on which the cylinder lock 1 is disposed in accordance with the attachment and detachment of the cap 4 with respect to the operation opening 2, and being elastically locked to and unlocked from the locked portion 5.

In the present disclosure in which the elastic locking portion 6 is translationally moved along the front surface of the door at the time of being locked to and unlocked from the locked portion 5, it is not necessary to set a movement space or the like for the elastic locking portion 6 in a height direction of the handle body portion 3. Thus, the cylinder lock 1 can be disposed near the front surface of the handle body portion 3, and operability of the cylinder lock 1 can be improved.

Further, the elastic locking portion 6 can be configured as a spring having both ends held by the handle body portion 3 and an intermediate portion moving forward and backward with respect to a path for the attachment and detachment of the cap 4. In this case, the elastic locking portion 6 can be formed of an elastic material, and can be held by engaging locking bent portions 8 formed at both ends of an arc-shaped main body portion 7 to spring locking portions 9 formed in the handle body portion 3.

Further, the locked portion 5 is formed in the cap 4, and a locking surface 10 of the locked portion 5 can be formed by a sloping surface which is inclined forward and downward toward a free end portion, and
when the elastic locking portion 6 is pressed-contact with the locking surface 10 in a state of being engaged to the locked portion 5, a component force in an attaching direction acts on the cap 4 due to the elasticity of the elastic locking portion 6, and thus rattling in the attaching state can be prevented.

### ADVANTAGEOUS EFFECTS OF INVENTION

According to the present disclosure, the cylinder lock can be disposed near the front surface of the handle body portion, and the operability for the cylinder lock can be enhanced.

### BRIEF DESCRIPTION OF DRAWINGS

FIG. 1A and FIG. 1B are views showing a handle device to which the present disclosure is applied, wherein FIG. 1A is a front view and FIG. 1B is a cross-sectional view taken along a line 1B-1B in FIG. 1A.
FIG. 2A and FIG. 2B are views showing a cover handle, wherein FIG. 2A is a front view, and FIG. 2B is a cross-sectional view taken along a line 2B-2B in FIG. 2A.
FIG. 3A and FIG. 3B are views showing an elastic locking portion, wherein FIG. 3A is a view showing attachment operation to the cover handle, and FIG. 3B is a view showing a state in which the elastic locking portion is fixed to the cover handle.
FIG. 4A to FIG. 4E are views showing a cap, wherein FIG. 4A is a front view, FIG. 4B is a view taken in a direction of an arrow 4B of FIG. 4A, FIG. 4C is a cross-sectional view taken along a line 4C-4C of FIG. 4A, FIG. 4D is a view taken in a direction of an arrow 4D of FIG. 4B, and FIG. 4E is a perspective view seen from a back surface direction.
FIG. 5A to FIG. 5E are views showing attaching operation of the cap, wherein FIG. 5A is a view showing an unattached state, FIG. 5B is a view showing a start of the attaching operation, FIG. 5C is a view showing a state in which the cap is rotated, FIG. 5D is a view showing a state in which the attachment is completed, and FIG. 5E is an enlarged view of a main portion FIG. 5D.
FIG. 6 is a diagram showing a method of removing the cap.
FIG. 7A and FIG. 7B are views showing an example in the conventional art, wherein FIG. 7A is a perspective view shown in FIG. 2 of Patent Literature 1, and FIG. 7B is a cross-sectional view shown in FIG. 6 of Patent Literature 1.

### DESCRIPTION OF EMBODIMENTS

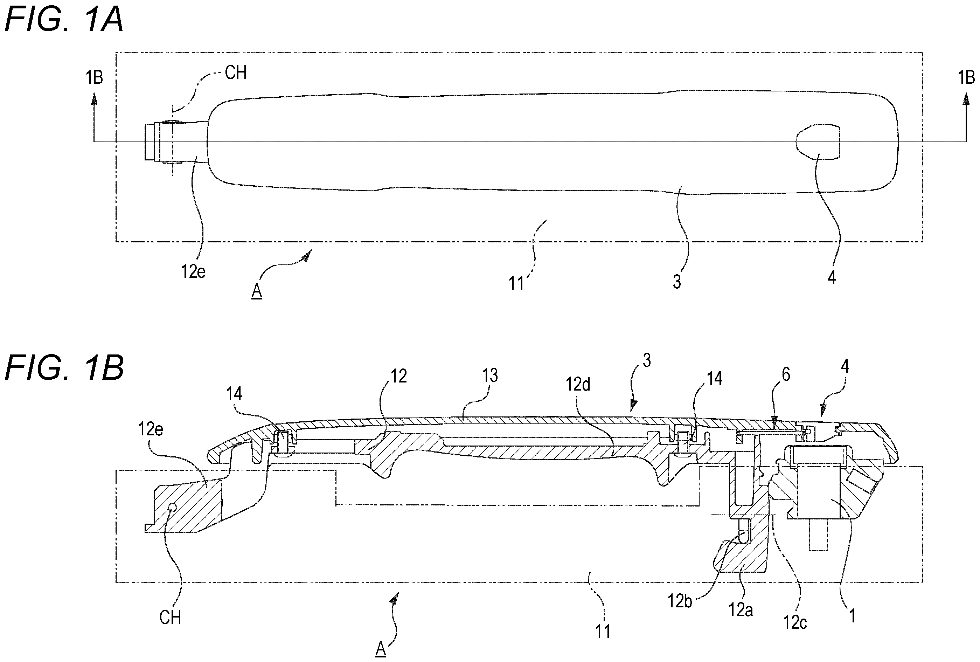

FIG. 1A and FIG. 1B show a handle device to which the present disclosure is applied.

A handle device (A) includes a vehicle handle of the present disclosure and a handle base 11 for fixing the vehicle handle to a door, and the vehicle handle can be rotated around a rotation center (CH) in a state of being attached to the handle base 11.

When the vehicle handle is rotated around the rotation center (CH) such that a rotation tip end side is pulled out from a door surface, an operation leg portion 12a moves in a door front surface direction, a lever 12b connected to the handle base 11 rotates around a rotation shaft 12c, and is transmitted as a latch release operation force to a door latch device (not shown).

The door latch device can perform a transition operation between a locked state and an unlocked state by an electronic control device (not shown). In the unlocked state, when the latch release operation force is applied, the latch holding a closed state of the door is released and a door opening operation is enabled. On the other hand, even when the latch release operation force is applied, that is, even when the rotating operation is applied to the vehicle handle in the locked state, the latch is not released, and a closed state of the door is maintained.

Further, the cylinder lock 1 is fixed to the handle base 11 as an auxiliary locking and unlocking operation means for the door latch device by the electronic control device, and even when the door latch device is in the locked state, the door latch device can be shifted to the unlocked state by the unlocking operation of the cylinder lock 1 by the user performing the latch release operation.

The vehicle handle includes a handle body portion 3 having an operation opening 2 for allowing access to the cylinder lock 1, and a cap 4 for normally closing the operation opening 2 of the handle body portion 3. In this example, the handle body portion 3 is formed by connecting a cover handle 13 that constitutes an outer appearance of the vehicle handle to a base handle 12 on which the operation leg portion 12a or the like are formed by bolts 14 or the like.

A handle recess 12d serving as a handle for operating the vehicle handle is formed in a central portion of the base handle 12, and a front end portion (in this specification, a left side in FIG. 1 is referred to as "front", a right side is referred to as "rear", an upper side in FIG. 1B is referred to as a "front side", and an opposite side is referred to as a "back side") is provided with a hinge protruding portion 12e for providing a rotation center (CH) of the vehicle handle.

The cover handle 13 is formed in a tray shape in which a peripheral edge is raised to the back side, and an operation opening 2 is formed in a rear end portion.

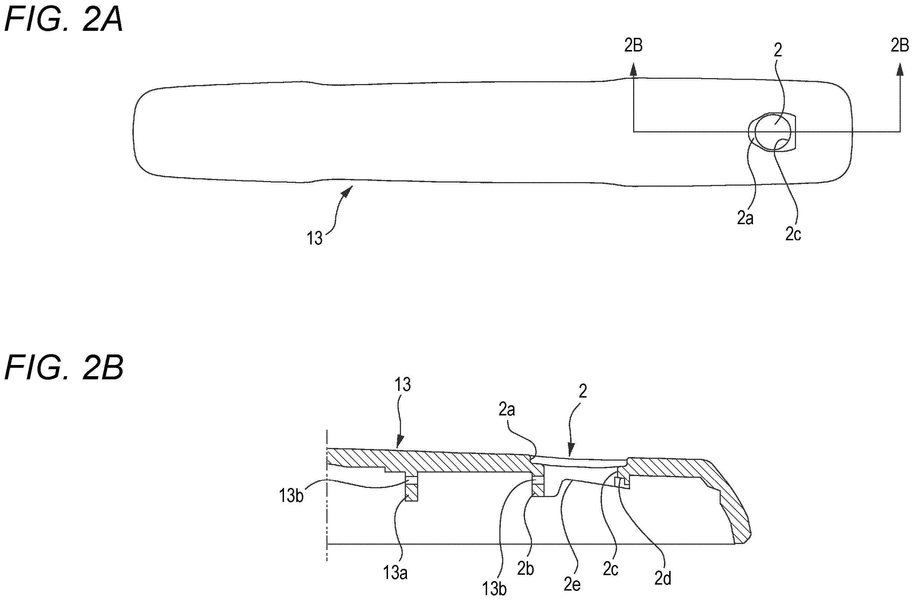

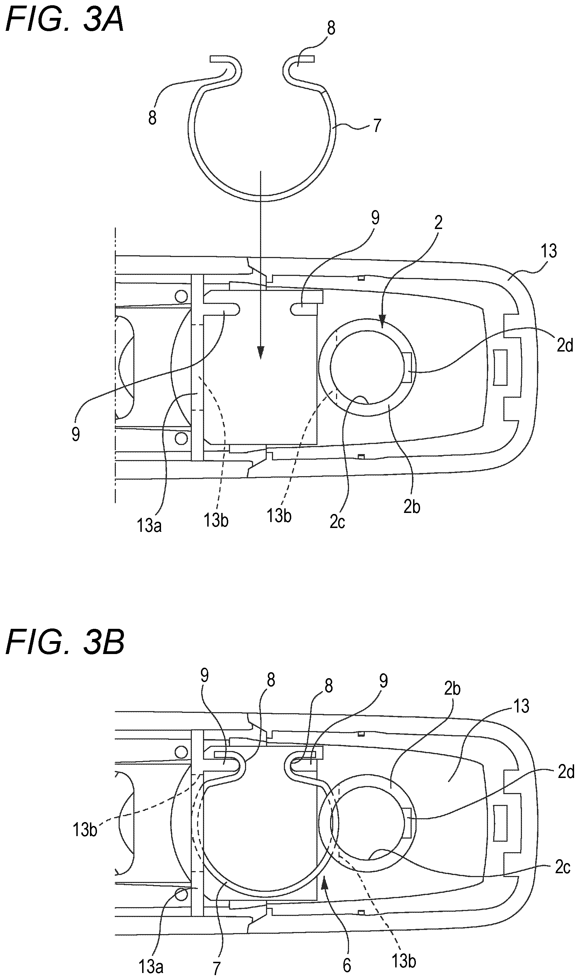

FIG. 2A and FIG. 2B are views showing a cover handle, wherein FIG. 2A is a front view, and FIG. 2B is a cross-sectional view taken along a line 2B-2B in FIG. 2A. FIG. 3A and FIG. 3B are views showing an elastic locking portion, wherein FIG. 3A is a view showing attachment operation to the cover handle, and FIG. 3B is a view showing a state in which the elastic locking portion is fixed to the cover handle.

As shown in FIG. 2A to FIG. 3B, the operation opening 2 includes a fitting recess 2a into which a design forming portion 4a of the cap 4 to be described later is fitted, and a through hole portion 2c that penetrates a bulging portion 2b protruding from a center portion of the fitting recess 2a in a back surface direction. A planar cap locking surface 2d continuing to the through hole portion 2c is formed on a back-side end surface of a rear end portion of the bulging portion 2b.

In this example, the through hole portion 2c is formed as a circular hole, and the bulging portion 2b is formed in a cylindrical shape.

As shown in FIG. 2B, a pushing recess 2e having a sloping surface whose height gradually decreases from the rear to the front is formed on a bottom surface of the bulging portion 2b. As will be described later, the pushing recess 2e provides an escape of a finger when the attached cap 4 is removed.

As shown in FIG. 2A to FIG. 3B, spring locking portions 9 and a spring retainer 13a protrude from the back surface of the cover handle 13, and slits 13b each having a height dimension slightly larger than a wire diameter of a spring 6 to be described later are formed at opposing positions in the spring retainer 13a and the bulging portion 2b.

Further, an elastic locking portion 6 is formed in the vicinity of the operation opening 2. In this example, the elastic locking portion is a spring formed by bending a spring wire having a circular cross section, and includes a main body portion 7 bent in a substantially circular shape, and locking bent portions 8 that can be locked to the spring locking portions 9 by folding back both free ends of the main body portion 7.

As shown in FIG. 3B, positions and the like of the spring 6 and the spring locking portions 9 are set such that a part of the main body portion 7 protrudes into the through hole portion 2c from the slit 13b formed in the bulging portion 2b in a state in which the locking bent portions 8 are locked to the spring locking portions 9, and a part facing an entrance to the operation opening 2 enters the slit 13b of the spring retainer 13a.

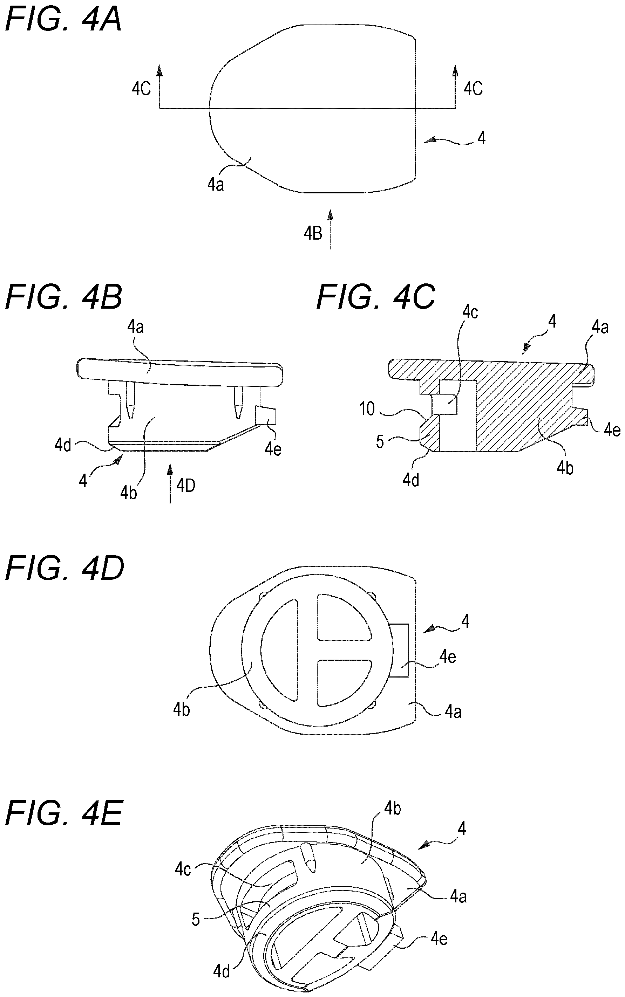

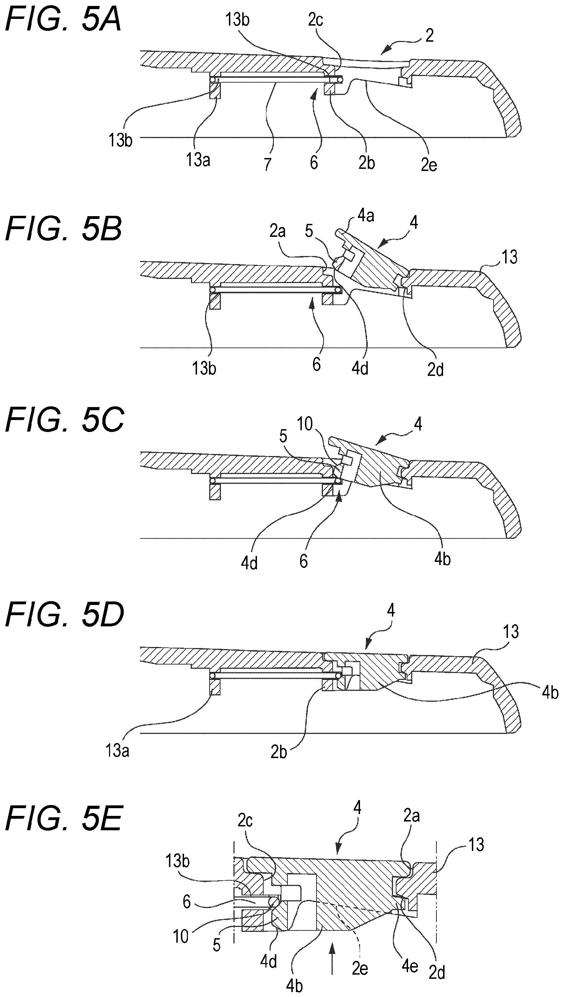

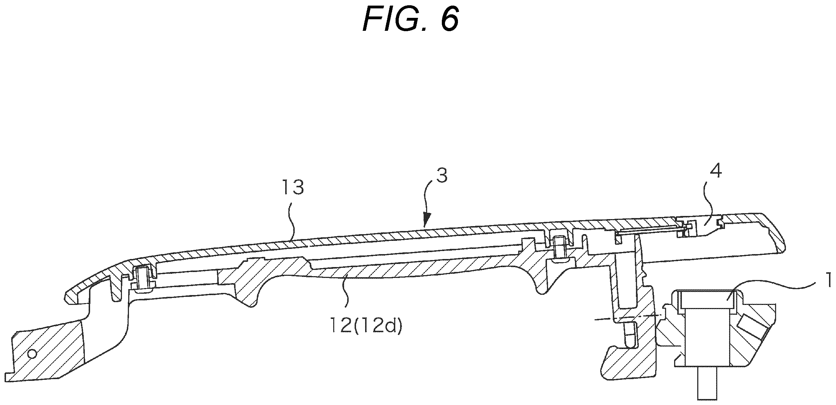

FIG. 4A to FIG. 4E are views showing a cap, wherein FIG. 4A is a front view, FIG. 4B is a view taken in a direction of an arrow 4B of FIG. 4A, FIG. 4C is a cross-sectional view taken along a line 4C-4C of FIG. 4A, FIG. 4D is a view taken in a direction of an arrow 4D of FIG. 4B, and FIG. 4E is a perspective view seen from a back surface direction. FIG. 5A to FIG. 5E are views showing attaching operation of the cap, wherein FIG. 5A is a view showing an unattached state, FIG. 5B is a view showing a start of the attaching operation, FIG. 5C is a view showing a state in which the cap is rotated, FIG. 5D is a view showing a state in which the attachment is completed, and FIG. 5E is an enlarged view of a main portion of FIG. 5D. FIG. 6 is a diagram showing a method of removing the cap.

As shown in FIG. 4A to FIG. 4E, the cap 4 that closes the operation opening 2 to prevent the exposure of the cylinder lock 1 to the outside has a design forming portion 4a that has a shape similar to a front view shape of the fitting recess 2a of the operation opening 2 and can be fitted into the fitting recess 2a, and a fitting protruding portion 4b protrudes from a back surface of the design forming portion 4a. As shown in FIG. 5C, the fitting protruding portion 4b can be fitted into the through hole portion 2c of the operation opening 2 in an oblique posture. On a side wall portion thereof, a locked portion 5 is formed on a back side with respect to a cut 4c by forming the cut 4c facing the slit 13b of a bulging portion 2b in a state in which the cap 4 is attached to the operation opening 2.

A front-side wall surface of the locked portion 5 is formed with a locking surface 10 which is a sloping surface gradually inclined toward the front surface toward a center portion of the fitting protruding portion 4b, and the back-side end surface of the fitting protruding portion 4b is formed with an attaching sloping surface 4d at a position overlapping the locking surface 10 in a plan view. The attaching sloping surface 4d is a sloping surface that is gradually inclined toward the back surface toward the central portion of the fitting protruding portion 4b, that is, a sloping surface that is gradually inclined forward and upward toward a free end, while the locking surface 10 is formed as a sloping surface that is inclined forward and downward toward the free end.

Further, a locking step portion 4e to be locked to the cap locking surface 2d in a state in which the cap 4 is attached to the operation opening 2 protrudes from a rear-end side wall portion of the fitting protruding portion 4b.

According to this example, as shown in FIG. 5A, the spring 6 is held in a posture substantially parallel to a back surface of the cover handle 13 in a state in which the spring 6 is attached to the cover handle 13, and when two opposing positions of the main body portion 7 are inserted into the slits 13b of the bulging portion 2b and the spring retainer 13a, the spring 6 is prevented from coming off from the cover handle 13.

From this state, as shown in FIG. 5B, when a back surface of a rear end portion of the design forming portion 4a of the cap 4 is placed on a bottom wall of the fitting recess 2a, and then a front end portion of the design forming portion 4a is rotated counterclockwise in FIG. 5B so as to be pressed with the abutting portion as a fulcrum, as shown in FIG. 5C, the attaching sloping surface 4d comes into contact with a portion of the spring 6 protruding into the through hole portion 2c. When a force in a pushing direction is further applied to the cap 4 from this state, the spring 6 is pushed toward the center by the attaching sloping surface 4d of the cap 4 and elastically deformed in a direction in which the main body portion 7 is reduced in diameter to allow passage of the locked portion 5. Thereafter, the cap 4 elastically returns to an original position and is elastically locked to the locked portion 5 of the cap 4 as shown in FIG. 5D.

In the locked state, the locking step portion 4e of the cap 4 is locked to the cap locking surface 2d of the cover handle 13, and the spring 6 restricts the movement of the locked portion 5 toward the front side, thereby separation of the cap 4 from the operation opening 2 is restricted.

Further, in the attached state of the cap 4, the spring 6 is slightly bent and, as shown in FIG. 5E, is pressed-contact against the locking surface 10 of the cap 4 by an elastic restoring force. As a result, a component force toward the back side acts on the locking surface 10 of the cap 4, and a back surface of a peripheral edge portion of the design forming portion 4a of the cap 4 is pressed against a front surface wall of the fitting recess 2a to prevent rattling.

When the cap 4 is removed from this state, as shown in FIG. 6, the entire vehicle handle is once rotated around the rotation center (CH). When the door latch device is not in the unlocked state, the latch release operation of a door latch is not performed by this operation, and in this state, the cap 4 can be removed using a space that is formed between the cylinder lock 1 and the cap 4 and is large enough for a finger to fit through.

The cap 4 can be removed by pushing up the back-side end surface of the fitting protruding portion 4b of the cap 4 to the front side with a finger as indicated by arrows in FIG. 5E. When the cap 4 is pushed up, a counterclockwise rotational force in FIG. 5E is generated in the cap 4 with a contact portion between the locking step portion 4e and the cap locking surface 2d of the cover handle 13 as a fulcrum, and the locking surface 10 applies a pushing force to the spring 6 toward the center.

As a result, the spring 6 retreats in an unlocking direction with respect to the locked portion 5 to allow the cap 4 to rotate, and the pushing recess 2e formed in the fitting protruding portion 4b provides an operation space for the cap 4, so that the cap 4 can be separated from the operation opening 2.

Although various embodiments have been described above with reference to the drawings, it is needless to say that the present disclosure is not limited to such embodiments. It is apparent to those skilled in the art that various variations or modifications can be conceived within the scope described in the claims, and it is understood that the variations or modifications naturally fall within the technical scope of the present disclosure. Further, the components described in the above embodiments may be freely combined without departing from the spirit of the disclosure.

The present application is based on Japanese Patent Application (Japanese Patent Application No. 2022-074269) filed on April 28, 2022, and the content thereof is incorporated herein as reference.

### REFERENCE SIGNS LIST

1 cylinder lock
2 operation opening
3 handle body portion
4 cap
5 locked portion
6 elastic locking portion
7 main body portion
8 locking bent portion
9 spring locking portion
10 locking surface

## Claims

1. A vehicle handle to be attached to a door of a vehicle such that the vehicle handle is operable to be pulled out, the vehicle handle comprising:
a handle body portion having an operation opening for a cylinder lock to be attached to the door; and
a cap configured to close the operation opening, wherein
an elastic locking portion is provided on one of the cap and the handle body portion, the elastic locking portion being translationally moved along a door front surface in accordance with an attachment and detachment of the cap with respect to the operation opening, and being elastically locked to and unlocked from a locked portion provided on the other of the cap and the handle body portion.

2. The vehicle handle according to claim 1, wherein
the elastic locking portion is a spring having both ends held by the handle body portion and an intermediate portion moving forward and backward with respect to a path for the attachment and detachment of the cap.

3. The vehicle handle according to claim 2, wherein
the elastic locking portion is formed of an elastic material, and is held by engaging locking bent portions formed at both ends of an arc-shaped main body portion to a spring locking portion formed in the handle body portion.

4. The vehicle handle according to claim 1, wherein
the locked portion is formed in the cap, and a locking surface of the locked portion is formed by a sloping surface inclined forward and downward toward a free end portion, and
the elastic locking portion is pressed-contact with the locking surface in a state of being engaged to the locked portion.
